(19) Europäisches Patentamt / European Patent Office / Office européen des brevets

(11) EP 4 679 526 A1

(12) **EUROPEAN PATENT APPLICATION**

(43) Date of publication:
**14.01.2026 Bulletin 2026/03**

(21) Application number: **25189064.6**

(22) Date of filing: **11.07.2025**

(51) International Patent Classification (IPC):
***H01M 4/38*** *(2006.01)* ***H01M 4/525*** *(2010.01)*
***H01M 10/052*** *(2010.01)* ***H01M 10/0565*** *(2010.01)*

(52) Cooperative Patent Classification (CPC):
**H01M 10/052; H01M 4/382; H01M 4/525; H01M 10/0565;** H01M 2300/0082; H01M 2300/0085; Y02E 60/10

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **12.07.2024 CN 202410931033**

(71) Applicant: **Jilin Dongchi New Energy Technology Co., Ltd**
**Changchun City, Jilin Province 130000 (CN)**

(72) Inventors:
- **SUN, Liqun**
  **Changchun City, 130000 (CN)**
- **XIE, Haiming**
  **Changchun City, 130000 (CN)**
- **ZHANG, Nan**
  **Changchun City, 130000 (CN)**

(74) Representative: **Porta & Consulenti Associati S.p.A.**
**Via Winckelmann, 1**
**20146 Milano (IT)**

(54) **AMPHIPHILIC QUASI-SOLID-STATE POLYMER ELECTROLYTE AND PREPARATION METHOD THEREOF, AND LITHIUM-ION BATTERY**

(57) Provided is an amphiphilic quasi-solid-state polymer electrolyte and a preparation method thereof, and a lithium-ion battery, belonging to the technical field of lithium-ion batteries. A method for preparing the amphiphilic quasi-solid-state polymer electrolyte includes the following steps: (1) subjecting a lithium salt, an isocyanoacrylate, a fluorinated acrylate, a crosslinking agent, and a plasticizer to a first mixing to obtain a raw material premix; (2) subjecting the raw material premix obtained in step (1) and a thermal initiator to a second mixing to obtain a precursor solution; and (3) subjecting the precursor solution obtained in step (2) to thermal polymerization to obtain the amphiphilic quasi-solid-state polymer electrolyte. The amphiphilic quasi-solid-state polymer electrolyte prepared by the method exhibits high ionic conductivity and exceptional safety performance. The lithium-ion battery incorporating the amphiphilic quasi-solid-state polymer electrolyte demonstrates excellent cycling stability.

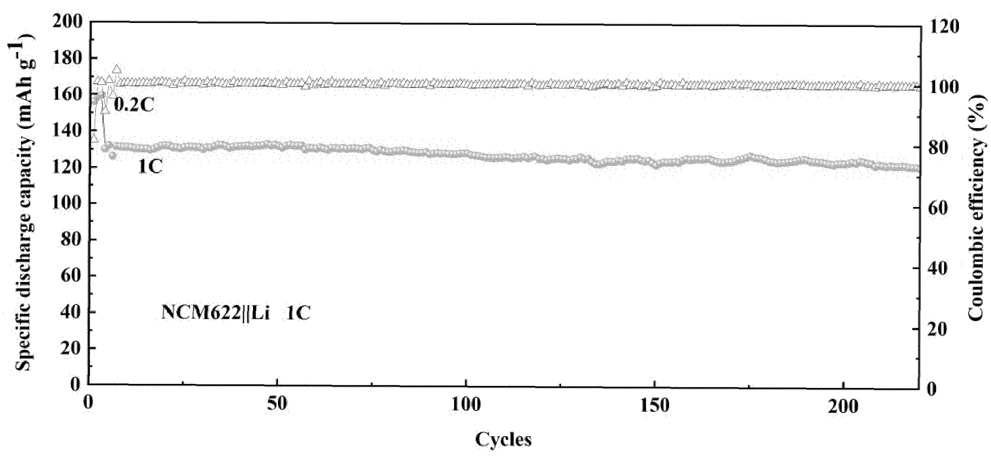


FIG.10



Processed by Luminess, 75001 PARIS (FR)

## Description

### TECHNICAL FIELD

The present disclosure relates to the technical field of lithium-ion batteries, and in particular relates to an amphiphilic quasi-solid-state polymer electrolyte and a preparation method thereof, and a lithium-ion battery.

### BACKGROUND

With the rapid development of the new energy vehicle industry, producing power batteries with both high energy density and safety has become an unremitting goal in this field. Lithium metal batteries utilizing nickel-rich cathodes ($LiNi_xCo_yMn_{1-x-y}O_2$, NCM, x > 0.5) can effectively increase the battery energy density to 450 Wh/kg. Consequently, the lithium metal electrode has become a focal point of attention. Currently, commercial lithium-ion batteries typically employ organic liquid electrolyte (LE) systems. However, when lithium metal is chosen as the anode, the lithium anode readily undergoes side reactions with the organic electrolyte during charge/discharge cycles, forming dendrites. These dendrites can pierce the separator, causing a short circuit and triggering thermal runaway, leading to a series of safety issues. Therefore, lithium metal anodes have not been successfully applied in conventional lithium-ion batteries, limiting the potential for increasing battery energy density.

Solid polymer electrolytes (SPEs) stand out due to their strong thermal stability and non-volatility. However, practical application of the SPEs has been hindered by poor ionic conductivity and unsatisfactory interfacial properties with electrodes. To address this issue, an intermediate electrolyte state, known as quasi-solid-state polymer electrolyte (QSPE), has been developed by gelating liquid solvents to form a solid polymer matrix. QSPE combines the advantages of both SPEs and LEs, including high ionic conductivity and desirable interfacial stability. Since the precursor electrolyte of QSPE has a viscosity similar to that of traditional liquid electrolytes, the precursor electrolyte of QSPE can easily infiltrate the entire battery area. Subsequent polymerization forms an integrated three-dimensional network structure throughout the battery, ensuring intimate contact between the solid electrolyte and the electroactive particles, which results in significantly lower interfacial resistance compared to batteries using pre-fabricated polymer films as electrolytes.

However, the solvents or plasticizers used in the preparation of QSPEs are typically hydrocarbon-based flammable liquids. These flammable solvents/plasticizers reduce the safety performance of the battery. Among current solutions, one approach is to add flame-retardant additives, such as organic phosphates, including trimethyl phosphate (TMP), triethyl phosphate (TEP), or diphenyl octyl phosphate (DPOF). Nevertheless, phosphate flame retardants tend to decrease the conductivity of the electrolyte and impair the electrochemical performance of the battery. Another approach is to use non-flammable solvents, such as fluorinated solvents, phosphate solvents, or butyronitrile solvent. However, the interface between the solid electrolyte formed with non-flammable solvents and the lithium metal anode still suffers from poor stability. A resulting solid electrolyte interface (SEI) fails to effectively passivate the lithium metal anode, leading to continuous side reactions between the non-flammable solvents and the lithium metal anode, ultimately degrading the cycling stability of lithium metal batteries.

### SUMMARY

An object of the present disclosure is to provide an amphiphilic quasi-solid-state polymer electrolyte and a preparation method thereof, and a lithium-ion battery. The lithium-ion battery prepared by using the amphiphilic quasi-solid-state polymer electrolyte obtained by the preparation method exhibits exceptional safety performance and high cycling stability.

To achieve the above object, the present disclosure provides the following technical solutions:

The present disclosure provides a method for preparing an amphiphilic quasi-solid-state polymer electrolyte, including the following steps:

(1) subjecting a lithium salt, an isocyanoacrylate, a fluorinated acrylate, a crosslinking agent, and a plasticizer to a first mixing to obtain a raw material premix;
(2) subjecting the raw material premix obtained in step (1) and a thermal initiator to a second mixing to obtain a precursor solution; and
(3) subjecting the precursor solution obtained in step (2) to thermal polymerization to obtain the amphiphilic quasi-solid-state polymer electrolyte.

In some embodiments, in step (1), a molar ratio of the isocyanoacrylate, the fluorinated acrylate, and the crosslinking is in a range of 0.1-1 : 1 : 0.05-0.5; and
a ratio of a total molar amount of the isocyanoacrylate, the fluorinated acrylate, and the crosslinking agent to a molar

amount of the plasticizer is in a range of 1 : 0.5 to 1 : 0.8.

In some embodiments, the lithium salt in the raw material premix in step (1) has a concentration of 0.7 mol/L to 1 mol/L.

In some embodiments, the isocyanoacrylate in step (1) includes (is) at least one selected from the group consisting of isocyanoethyl methacrylate, 2-isocyanoethyl acrylate, and 1,1-bis(acryloyloxymethyl)ethyl isocyanate.

In some embodiments, the fluorinated acrylate in step (1) includes (is) at least one selected from the group consisting of perfluoroalkylethyl methacrylate, 2-(perfluorooctyl)ethyl methacrylate, hexafluorobutyl methacrylate, and 2,2,3,4,4,4-hexafluorobutyl acrylate.

In some embodiments, the crosslinking agent in step (1) includes (is) at least one selected from the group consisting of ethoxylated trimethylolpropane triacrylate (ETPTA) and hydroxymethyl ETPTA.

In some embodiments, in step (2), a mass of the thermal initiator is 0.1% to 1% of a mass of the raw material premix.

In some embodiments, in step (3), the thermal polymerization is conducted at a temperature of 60°C to 80°C for 1 h to 2 h.

The present disclosure further provides an amphiphilic quasi-solid-state polymer electrolyte prepared by the method as described above.

The present disclosure further provides a lithium-ion battery, where an electrolyte in the lithium-ion battery is the amphiphilic quasi-solid-state polymer electrolyte as described above.

The present disclosure provides a method for preparing an amphiphilic quasi-solid-state polymer electrolyte, including the following steps: (1) subjecting a lithium salt, an isocyanoacrylate, a fluorinated acrylate, a crosslinking agent, and a plasticizer to a first mixing to obtain a raw material premix; (2) subjecting the raw material premix obtained in step (1) and a thermal initiator to a second mixing to obtain a precursor solution; and (3) subjecting the precursor solution obtained in step (2) to thermal polymerization to obtain the amphiphilic quasi-solid-state polymer electrolyte. In the present disclosure, a thermal initiator is utilized to trigger the *in-situ* thermal polymerization of a fluorinated acrylate, an isocyanoacrylate, and a crosslinking agent. The isocyanoacrylate bearing the N=C=O group and the fluorinated acrylate bearing the $CF_3$ group are grafted onto the crosslinking agent. Under the synergistic action of the flame-retardant $CF_3$ group and the thermal shutdown N=C=O group, the resulting amphiphilic quasi-solid-state polymer electrolyte acquires inherent thermal shutdown and flame-retardant properties without requiring additional flame-retardant additives or selecting non-flammable plasticizers, thereby significantly enhancing the safety of batteries incorporating the quasi-solid-state polymer electrolyte. Furthermore, the introduction of the N=C=O group enables one-step construction of the electrode-electrolyte interface, improving the cycling stability of the lithium-ion battery. Experimental results demonstrate that the amphiphilic quasi-solid-state polymer electrolyte exhibits: a high ionic conductivity of $1.3\times10^{-4}$ S $cm^{-1}$ at room temperature; excellent flame retardancy, showing no significant surface blackening or charring upon ignition, with a self-extinguishing time (SET) value of 0 s; exceptional safety performance, as evidenced by the total impedance of lithium-ion batteries incorporating the amphiphilic quasi-solid-state polymer electrolyte increasing from 345.35 Ω to 2,584.89 Ω after heating at 175°C for 10 min; and high cycling stability, with the lithium-ion battery maintaining a capacity retention rate of 92.7% after 220 cycles at 1C.

## BRIEF DESCRIPTION OF THE DRAWINGS

FIG. 1 shows a process diagram of the thermal polymerization in Example 1 of the present disclosure, where panel (a) shows the precursor solution, and panel (b) shows the amphiphilic quasi-solid-state polymer electrolyte after thermal polymerization;

FIG. 2 shows an assembly flowchart of the lithium-ion battery of an embodiment of the present disclosure;

FIG. 3 shows a macroscopic photograph of the amphiphilic quasi-solid-state polymer electrolyte prepared in Example 1 of the present disclosure;

FIG. 4 shows scanning electron microscopy (SEM) images of the amphiphilic quasi-solid-state polymer electrolyte prepared in Example 1 of the present disclosure and a polyethylene separator, where panel (a) shows the amphiphilic quasi-solid-state polymer electrolyte membrane, and panel (b) shows the polyethylene separator;

FIG. 5 shows an impedance spectrum of the amphiphilic quasi-solid-state polymer electrolyte prepared in Example 1 of the present disclosure;

FIG. 6 shows a linear sweep voltammetry curve of the amphiphilic quasi-solid-state polymer electrolyte prepared in Example 1 of the present disclosure;

FIG. 7 shows flame retardancy test results of the amphiphilic quasi-solid-state polymer electrolyte membrane prepared in Example 1 of the present disclosure and the tetraethylene glycol dimethyl ether (TEGDME) plasticizer, where panel (a) shows the TEGDME plasticizer, and panel (b) shows the amphiphilic quasi-solid-state polymer

electrolyte membrane;

FIG. 8 shows SEM images of the amphiphilic quasi-solid-state polymer electrolyte prepared in Example 1 of the present disclosure before heating and after heating at 175°C for 10 min, where panel (a) shows before heating, scale bar: 10 μm; panel (b) shows before heating, scale bar: 5 μm; panel (c) shows after heating for 10 min, scale bar: 10 μm; and panel(d) shows after heating for 10 min, scale bar: 5 μm;

FIG. 9 shows impedance spectra of the lithium-ion battery in Use Example 1 of the present disclosure at room temperature (RT) and after heating at 175°C for 10 min (175°C); and

FIG. 10 shows the cycling performance curve of the lithium-ion battery in Use Example 1 of the present disclosure at a 1C rate.

## DETAILED DESCRIPTION OF THE EMBODIMENTS

The present disclosure provides a method for preparing an amphiphilic quasi-solid-state polymer electrolyte, including the following steps:

(1) subjecting a lithium salt, an isocyanoacrylate, a fluorinated acrylate, a crosslinking agent, and a plasticizer to a first mixing to obtain a raw material premix;

(2) subjecting the raw material premix obtained in step (1) and a thermal initiator to a second mixing to obtain a precursor solution; and

(3) subjecting the precursor solution obtained in step (2) to thermal polymerization to obtain the amphiphilic quasi-solid-state polymer electrolyte.

In the present disclosure, a lithium salt, an isocyanoacrylate, a fluorinated acrylate, a crosslinking agent, and a plasticizer are subjected to a first mixing to obtain a raw material premix.

In some embodiments of the present disclosure, the isocyanoacrylate is at least one selected from the group consisting of isocyanoethyl methacrylate (Formula I-1), 2-isocyanoethyl acrylate (Formula I-2), and 1,1-bis(acryloyloxymethyl)ethyl isocyanate (Formula I-3). The N=C=O group provided by the isocyanoacrylate imparts thermal shutdown properties to the electrolyte. Limiting the type of isocyanoacrylate to the above-specified range ensures that the quasi-solid-state polymer electrolyte possesses desirable thermal shutdown performance, further enhancing battery safety and ensuring cycling stability.

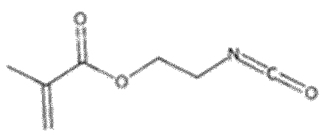
Formula I-1

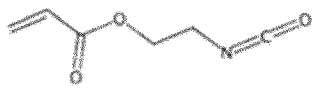
Formula I-2

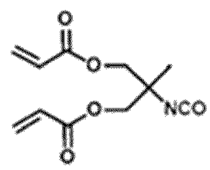
Formula I-3

In some embodiments of the present disclosure, the fluorinated acrylate is at least one selected from the group consisting of perfluoroalkylethyl methacrylate (Formula II-1), 2-(perfluorooctyl)ethyl methacrylate (Formula II-2), hexafluorobutyl methacrylate (Formula II-3), and 2,2,3,4,4,4-hexafluorobutyl acrylate (Formula II-4). The $CF_3$ group provided by the fluorinated acrylate exhibits flame-retardant properties. Limiting the type of fluorinated acrylate to the above-specified range ensures that the quasi-solid-state polymer electrolyte possesses desirable flame retardancy, further improving battery safety.

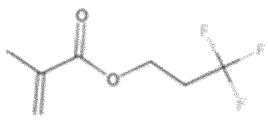
Formula II-1

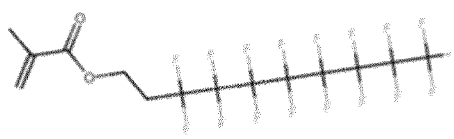
Formula II-2

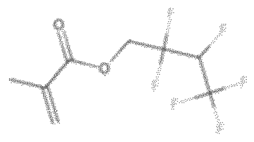

Formula II-3

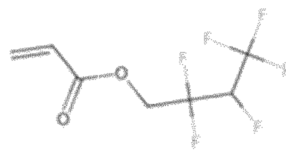

Formula II-4

In some embodiments of the present disclosure, the crosslinking agent includes ETPTA (Formula III-1) and/or hydroxymethyl ETPTA (Formula III-2). The crosslinking agent crosslinks the isocyanoacrylate and the fluorinated acrylate. Limiting the type of crosslinking agent to the above-specified range ensures the smooth progression of the crosslinking reaction and maintains the electrochemical performance of the lithium-ion battery.

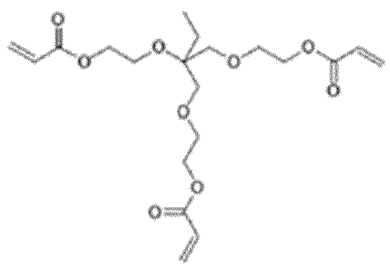

Formula III-1

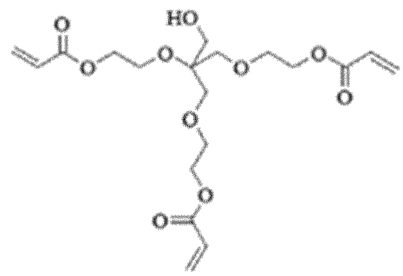

Formula III-2

In some embodiments of the present disclosure, a molar ratio of the isocyanoacrylate, the fluorinated acrylate, and the crosslinking agent is in a range of 0.1-1 : 1 : 0.05-0.5, more preferably 0.2-0.5 : 1 : 0.05-0.2, and most preferably 0.3-0.4 : 1 : 0.1. Limiting the molar ratio of the isocyanoacrylate, the fluorinated acrylate, and the crosslinking agent to the above-specified range controls the grafting amount of the isocyanoacrylate and the fluorinated acrylate onto the crosslinking agent, and enables the synergistic action of the flame-retardant $CF_3$ group and the thermal shutdown N=C=O group, further enhancing the safety of batteries incorporating the quasi-solid-state polymer electrolyte.

In some embodiments of the present disclosure, the plasticizer is at least one selected from the group consisting of ethylene glycol dimethyl ether, triethylene glycol dimethyl ether (TEGDME), and tetraethylene glycol dimethyl ether, more preferably TEGDME. The plasticizer improves the ionic conductivity of the amphiphilic quasi-solid-state polymer electrolyte and reduces interfacial impedance. Limiting the type of plasticizer to the above-specified range further improves the cycling stability of the battery.

In some embodiments of the present disclosure, a ratio of a total molar amount of the isocyanoacrylate, the fluorinated acrylate, and crosslinking agent to a molar amount of the plasticizer is in a range of 1 : 0.5 to 1 : 0.8, more preferably 1 : 0.6 to 1 : 0.7, and most preferably 1 : 0.7. Limiting the ratio of the total molar amount of the isocyanoacrylate, the fluorinated acrylate, and the crosslinking agent to the molar amount of the plasticizer to the above-specified range enables the quasi-solid-state polymer electrolyte to possess desirable flame retardancy without requiring the use of non-flammable plasticizers, improves the ionic conductivity of the amphiphilic quasi-solid-state polymer electrolyte, and reduces interfacial impedance, thereby enhancing the cycling stability of the battery.

In some embodiments of the present disclosure, the lithium salt is at least one selected from the group consisting of lithium hexafluorophosphate, lithium perchlorate, lithium bis(trifluoromethanesulfonyl)imide, lithium bis(fluorosulfonyl)imide, lithium difluoro(oxalato)borate, and lithium bis(oxalato)borate, more preferably a mixture of the lithium bis(trifluoromethanesulfonyl)imide (LiTFSI) and the lithium difluoro(oxalato)borate (LiDFOB). In some embodiments of the present disclosure, in the mixture of the LiTFSI and the LiDFOB, a mass ratio of the LiTFSI to the LiDFOB is 10:1. Limiting the type of lithium salt to the above-specified range further improves the conductivity of the amphiphilic quasi-solid-state polymer electrolyte, thereby enhancing the performance of the lithium-ion battery.

In some embodiments of the present disclosure, a concentration of the lithium salt in the raw material premix is in a range of 0.7 mol/L to 1 mol/L, more preferably 0.7 mol/L to 0.8 mol/L. Limiting the type and concentration of the lithium salt to the above-specified ranges further improves the electrochemical performance of batteries incorporating the electrolyte.

In some embodiments of the present disclosure, the first mixing is conducted under stirring at a rotation speed of 100 r/min to 300 r/min; and the first mixing is conducted at room temperature for 5 h to 12 h. Limiting the stirring speed, temperature, and duration of the first mixing to the above-specified ranges ensures thorough mixing of the reactants, facilitating the subsequent free radical reaction during the heating process.

In the present disclosure, the raw material premix and a thermal initiator are subjected to a second mixing to

obtain a precursor solution.

In some embodiments of the present disclosure, the thermal initiator includes azobisisobutyronitrile (AIBN) and/or 2,2'-azobis(2-methylpropionitrile), more preferably AIBN; and a mass of the thermal initiator is 0.1% to 1% of a mass of the raw material premix, more preferably 0.3% to 0.8%, and most preferably 0.5%. The thermal initiator initiates the polymerization reaction. Limiting the type and content of the thermal initiator to the above-specified ranges ensures the smooth progression of the thermal polymerization reaction.

In some embodiments of the present disclosure, the second mixing is conducted under stirring at a rotation speed of 100 r/min to 300 r/min; and the second mixing is conducted at room temperature for 1 h to 2 h. Limiting the stirring speed, temperature, and duration of the second mixing to the above-specified ranges ensures thorough mixing of the reaction materials and prevents spontaneous free radical polymerization between the thermal initiator and the monomer reagents.

In the present disclosure, the precursor solution is subjected to thermal polymerization to obtain the amphiphilic quasi-solid-state polymer electrolyte.

In some embodiments of the present disclosure, the thermal polymerization is conducted at a temperature of 60°C to 80°C, more preferably 70°C for 1 h to 2 h, more preferably 1 h to 1.5 h; and the thermal polymerization is conducted in a vacuum oven. During the thermal polymerization reaction, the N=C=O group on the isocyanoacrylate and the $CF_3$ group on the fluorinated acrylate are grafted onto the crosslinking agent, forming a crosslinked polymer. Limiting the temperature and duration of the thermal polymerization reaction to the above-specified ranges ensures the thorough progression of the reaction, thereby enhancing the performance of lithium-ion batteries incorporating the amphiphilic quasi-solid-state polymer electrolyte.

In some embodiments of the present disclosure, the precursor solution is spread evenly in a container and subjected to thermal polymerization to obtain an amphiphilic quasi-solid-state polymer electrolyte membrane.

In some embodiments of the present disclosure, under a condition that the amphiphilic quasi-solid-state polymer electrolyte is applied to a lithium-ion battery, the precursor solution is injected into a designated electrolyte location within the lithium-ion battery and subjected to *in-situ* thermal polymerization to obtain the amphiphilic quasi-solid-state polymer electrolyte. There are no specific limitations on the method for injecting the precursor solution into the lithium-ion battery; any injection technique well-known to those skilled in the art may be employed.

In the present disclosure, by utilizing *in-situ* thermal polymerization of the fluorinated acrylate, the isocyanoacrylate, the crosslinking agent, and the thermal initiator, the isocyanoacrylate bearing the N=C=O group and the fluorinated acrylate bearing the $CF_3$ group are grafted onto the crosslinking agent. Under the synergistic action of the flame-retardant $CF_3$ group and the thermal shutdown N=C=O group, the amphiphilic quasi-solid-state polymer electrolyte acquires inherent thermal shutdown and flame-retardant properties, significantly enhancing the safety of batteries incorporating this electrolyte. Furthermore, the introduction of the N=C=O group enables one-step construction of the electrode-electrolyte interface, improving the cycling stability of the lithium-ion battery. Furthermore, the addition of the plasticizer increases the ionic conductivity of the amphiphilic quasi-solid-state polymer electrolyte and reduces interfacial impedance, further improving the cycling stability of the battery.

The present disclosure further provides an amphiphilic quasi-solid-state polymer electrolyte prepared by the method as described above.

The present disclosure further provides a lithium-ion battery, where an electrolyte in the lithium-ion battery is the amphiphilic quasi-solid-state polymer electrolyte as described above.

In some embodiments of the present disclosure, the lithium-ion battery includes a positive electrode, a negative electrode, a separator, and an electrolyte; where the electrolyte is the amphiphilic quasi-solid-state polymer electrolyte. In some embodiments of the present disclosure, the positive electrode is $LiNi_xCo_yMn_{1-x-y}O_2$ ($x > 0.5$), more preferably $LiNi_{0.6}Co_{0.2}Mn_{0.2}O_2$; the negative electrode is metallic lithium; and the separator includes at least one selected from the group consisting of polyethylene (PE), polypropylene (PP), cellulose, and glass fiber, more preferably polyethylene or polypropylene, where the separator has a thickness of 10 μm to 100 μm, more preferably 10 μm to 50 μm.

In some embodiments of the present disclosure, specific assembly operation of the lithium-ion battery includes: assembling the positive electrode, the separator, and the negative electrode in sequence, injecting the precursor solution to fully impregnate the separator, and then conducting the thermal polymerization to obtain the lithium-ion battery. There are no specific limitations on a volume of the precursor solution that is injected, it may be conventionally selected based on a volume of the lithium-ion battery. In some embodiments, the volume of an injected precursor solution is in a range of 20 μL to 50 μL, more preferably 30 μL.

In some embodiments of the present disclosure, the lithium-ion battery is assembled in an argon-filled glove box, where contents of $H_2O$ and $O_2$ in the argon-filled glove box are independently ≤0.1 ppm.

The technical solutions of the present disclosure will be clearly and completely described below with reference to the examples of the present disclosure. Apparently, the described examples are merely a part rather than all of the examples of the present disclosure. All other examples obtained by those skilled in the art based on the examples of the present disclosure without inventive efforts shall fall within the scope of the present disclosure.

### Example 1

A method for preparing an amphiphilic quasi-solid-state polymer electrolyte was performed as follows:

(1) Lithium bis(trifluoromethanesulfonyl)imide (LiTFSI), isocyanoethyl methacrylate (Formula I-1), 2,2,3,4,4,4-hexafluorobutyl methacrylate (Formula II-3), ETPTA (Formula III-1), and tetraethylene glycol dimethyl ether (TEGDME) were stirred at 300 r/min for 12 h to obtain a raw material premix. A molar ratio of the isocyanoethyl methacrylate (Formula I-1), the 2,2,3,4,4,4-hexafluorobutyl methacrylate (Formula II-3), and the ETPTA (Formula III-1) was 0.33 : 1 : 0.1. A ratio of a total molar amount of the isocyanoethyl methacrylate (Formula I-1), the 2,2,3,4,4,4-hexafluorobutyl methacrylate (Formula II-3), and the ETPTA (Formula III-1) to a molar amount of the TEGDME was 1 : 0.7. A molar concentration of the LiTFSI in the raw material premix was 0.8 mol/L.
(2) The raw material premix obtained in step (1) and AIBN were stirred at 300 r/min for 1 h to obtain a precursor solution. A mass percentage of the AIBN was 0.5% that of the raw material premix.
(3) The precursor solution obtained in step (2) was heated at 70°C in a vacuum oven for 1 h. A thermal polymerization was initiated by a thermal initiator, obtaining the amphiphilic quasi-solid-state polymer electrolyte (membrane). The amphiphilic quasi-solid-state polymer electrolyte (membrane) had a thickness of 20 μm.

### Example 2

Example 2 differed from Example 1 only in that 2,2,3,4,4,4-hexafluorobutyl methacrylate (Formula II-3) was replaced with perfluoroalkylethyl methacrylate (Formula II-1). All other conditions were identical to Example 1.

### Example 3

Example 3 differed from Example 1 only in that isocyanoethyl methacrylate (Formula I-1) was replaced with 2-isocyanoethyl acrylate (Formula I-2). All other conditions were identical to Example 1.

### Example 4

Example 4 differed from Example 1 only in that ETPTA (Formula III-1) was replaced with hydroxymethyl ETPTA (Formula III-2). All other conditions were identical to Example 1.

### Use Examples 1 to 4

A lithium-ion battery was assembled as follows:
In an argon-filled glove box ($H_2O$ and $O_2$ contents both ≤0.1 ppm), a battery was assembled by using $LiNi_xCo_yMn_{1-x-y}O_2$ ($x > 0.5$) as a positive electrode, metallic lithium as a negative electrode, and a 17 μm-thick polyethylene separator as a barrier medium. Then, 35 μL of precursor solutions obtained from Examples 1 to 4 were separately injected to fully impregnate the barrier medium. A resulting product was placed in a vacuum oven at 70°C and heated for 1 h and subjected to thermal polymerization, obtaining the lithium-ion battery.

Morphology observation: the microstructure of the amphiphilic quasi-solid-state polymer electrolyte (membrane) was observed by using a scanning electron microscope (SEM).

Impedance testing: potentiostatic electrochemical impedance spectroscopy (EIS) of the amphiphilic quasi-solid-state polymer electrolyte (membrane) was conducted at room temperature by using a Princeton Applied Research P4000 electrochemical workstation. The test frequency range was 1 MHz to 1 Hz.

Electrochemical window testing: the electrochemical window of the amphiphilic quasi-solid-state polymer electrolyte (membrane) was determined by linear sweep voltammetry (LSV), with a voltage range from open-circuit voltage (OCV) to 6 V.

Battery performance testing: the charge/discharge behavior and cycling stability of the lithium-ion battery were tested at room temperature by using a LAND CT2001A test system, with a voltage range of 2.8 V to 4.3 V.

The thermal polymerization process in Example 1 is shown in FIG. 1, where panel (a) shows the precursor solution and panel (b) shows the amphiphilic quasi-solid-state polymer electrolyte post-polymerization. FIG. 1 confirms complete thermal polymerization with no residual liquid flow.

The assembly flowchart of the lithium-ion battery is depicted in FIG. 2. FIG. 2 illustrates the precursor solution being dripped onto the barrier medium, the barrier medium being subjected to full impregnation, and the precursor solution being heated at 70°C to obtain the lithium-ion battery.

FIG. 3 displays a macroscopic photograph of the amphiphilic quasi-solid-state polymer electrolyte (membrane) prepared in Example 1. The amphiphilic quasi-solid-state polymer electrolyte membrane prepared in Example 1 as shown

in FIG. 3 is transparent and flexible. FIG. 4 presents SEM images of the the amphiphilic quasi-solid-state polymer electrolyte (membrane), and FIG. 4 reveals a uniform 3D wrinkled surface morphology of the amphiphilic quasi-solid-state polymer electrolyte, facilitating lithium-ion transport.

FIG. 5 shows the impedance spectrum of the amphiphilic quasi-solid-state polymer electrolyte (membrane) from Example 1. FIG. 5 confirms that the resistance R of the amphiphilic quasi-solid-state polymer electrolyte is measured as 7.19 Ω. Using Formula 1, the room-temperature ionic conductivity is calculated as $1.3\times10^{-4}$ S/cm. In Formula 1, σ represents ionic conductivity (S/cm), *l* represents thickness of solid electrolyte membrane (cm), R represents electrolyte resistance (Ω), s represents effective electrode area ($cm^2$) of solid electrolyte.

$$\sigma = \frac{l}{RS} \quad \text{Formula 1}$$

FIG. 6 displays the linear sweep voltammetry curve of the amphiphilic quasi-solid-state polymer electrolyte (membrane) prepared in Example 1. FIG. 6 demonstrates that oxidation potential exceeds 5 V, attributable to the high-voltage-resistant functional groups ($CF_3$ and N=C=O). Despite containing the TEGDME plasticizer (oxidation potential: 4 V), the membrane maintains high oxidation stability.

The flame retardancy test results for the amphiphilic quasi-solid-state polymer electrolyte (membrane) in Example 1 and the TEGDME plasticizer are presented in FIG. 7, where panel (a) shows the TEGDME plasticizer and panel (b) shows the amphiphilic quasi-solid-state polymer electrolyte membrane. From FIG. 7, it can be observed that: the initial state shows the starting condition of the amphiphilic quasi-solid polymer electrolyte membrane and the TEGDME plasticizer; the contact state shows the amphiphilic quasi-solid polymer electrolyte membrane and the TEGDME plasticizer just before exposure to an open flame; the 0 s state shows the condition of the amphiphilic quasi-solid polymer electrolyte membrane and the TEGDME plasticizer after 0 seconds of exposure to the open flame; and the 3 s state shows the condition of the amphiphilic quasi-solid polymer electrolyte membrane and the TEGDME plasticizer after 3 seconds of exposure to the open flame. The TEGDME plasticizer ignites violently with bright flames upon flame exposure. In contrast, the amphiphilic quasi-solid polymer electrolyte membrane exhibits no significant blackening or charring upon exposure to an open flame, and a self-extinguishing time (SET) value of 0 s, demonstrating exceptional flame retardancy. This behavior is attributed to the gas-phase radical scavenging effect of $CF_3$ groups: at high temperatures, F radicals are formed, and the F radicals combine with H radicals to undergo an elimination reaction, thereby suppressing combustion and eliminating the inherent flammability of ether-based electrolytes.

FIG. 8 shows SEM images of the amphiphilic quasi-solid-state polymer electrolyte (membrane) in Example 1 before and after heating at 175°C for 10 min: panel (a) shows before heating, scale bar: 10 μm; panel (b) shows before heating, scale bar: 5 μm; panel (c) shows 10 min after heating, scale bar: 10 μm; and panel (d) shows 10 min after heating, scale bar: 5 μm. After heating, the 3D wrinkled structure becomes significantly denser, indicating increased crosslinking density (FIG. 8). This structural change confirms the material's thermal shutdown functionality.

The impedance spectra of the lithium-ion battery from Use Example 1 at room temperature (RT) and after heating at 175°C for 10 min (175°C) are shown in FIG. 9. FIG. 9 suggests that the total impedance (including bulk impedance, interphase impedance, and charge-transfer impedance) of the button battery increases from 345.35 Ω to 2,584.89 Ω after heating at 175°C for 10 min, indicating slowed ion transport kinetics at high temperatures and confirming the thermal shutdown functionality.

FIG. 10 displays the cycling performance curve of the lithium-ion battery in Use Example 1 at a 1C rate. Under a 1C rate, after 220 cycles, the discharge specific capacity of the lithium-ion battery is 130 mAh/g after the first cycle and 120.5 mAh/g after 220 cycles. The capacity retention rate reaches 92.7%, demonstrating excellent cycling stability of batteries employing the amphiphilic quasi-solid-state polymer electrolyte (FIG. 10).

Table 1 shows the room-temperature ionic conductivity test data for the amphiphilic quasi-solid-state polymer electrolytes from Examples 1 to 4.

**Table 1 Room-temperature ionic conductivity test data for amphiphilic quasi-solid-state polymer electrolytes from Examples 1 to 4**

| Example | Electric conductivity at room-temperature (RT) |
|---|---|
| Example 1 | $1.3\times10^{-4}$S/cm |
| Example 2 | $1.0\times10^{-4}$S/cm |
| Example 3 | $1.6\times 10^{-4}$S/cm |
| Example 4 | $1.2\times10^{-4}$S/cm |

The first-cycle specific discharge capacities and capacity retention rates after 220 cycles at 1C for lithium-ion batteries in Use Examples 1 to 4 are compiled in Table 2.

**Table 2 First-cycle specific discharge capacities and capacity retention rates after 220 cycles at 1C for lithium-ion batteries in Use Examples 1 to 4**

| Use Example | First-cycle specific discharge capacity (mAh/g) | Capacity retention rate (%) |
|---|---|---|
| Use example 1 | 130 | 92.7 |
| Use example 2 | 120 | 80.1 |
| Use example 3 | 125 | 82.0 |
| Use example 4 | 122 | 75.0 |

Experimental results demonstrate that the amphiphilic quasi-solid-state polymer electrolyte exhibits: a high ionic conductivity of $1.3\times10^{-4}$ S $cm^{-1}$ at room temperature; excellent flame retardancy, showing no significant surface blackening or charring upon ignition, with a self-extinguishing time (SET) value of 0 s; exceptional safety performance, as evidenced by the total impedance of lithium-ion batteries incorporating the amphiphilic quasi-solid-state polymer electrolyte increasing from 345.35 Ω to 2,584.89 Q after heating at 175°C for 10 min; and high cycling stability, with the lithium-ion battery assembled with the amphiphilic quasi-solid-state polymer electrolyte maintaining a capacity retention rate of 92.7% after 220 cycles at 1C.

The above descriptions are merely preferred embodiments of the present disclosure. It should be noted that a person of ordinary skill in the art may further make several improvements and modifications without departing from the principle of the present disclosure, but such improvements and modifications should be deemed as falling within the scope of the present disclosure.

## Claims

1. A method for preparing an amphiphilic quasi-solid-state polymer electrolyte, comprising the following steps:

   (1) subjecting a lithium salt, an isocyanoacrylate, a fluorinated acrylate, a crosslinking agent, and a plasticizer to a first mixing to obtain a raw material premix;
   (2) subjecting the raw material premix obtained in step (1) and a thermal initiator to a second mixing to obtain a precursor solution; and
   (3) subjecting the precursor solution obtained in step (2) to thermal polymerization to obtain the amphiphilic quasi-solid-state polymer electrolyte.

2. The method of claim 1, wherein in step (1), a molar ratio of the isocyanoacrylate, the fluorinated acrylate, and the crosslinking agent is in a range of 0.1-1 : 1 : 0.05-0.5, and a ratio of a total molar amount of the isocyanoacrylate, the fluorinated acrylate, and the crosslinking agent to a molar amount of the plasticizer is in a range of 1 : 0.5 to 1 : 0.8.

3. The method of claim 1, wherein in step (1), the lithium salt in the raw material premix has a concentration of 0.7 mol/L to 1 mol/L.

4. The method of claim 1, wherein in step (1), the isocyanoacrylate comprises at least one selected from the group consisting of isocyanoethyl methacrylate, 2-isocyanoethyl acrylate, and 1,1-bis(acryloyloxymethyl)ethyl isocyanate.

5. The method of claim 1, wherein in step (1), the fluorinated acrylate comprises at least one selected from the group consisting of perfluoroalkylethyl methacrylate, 2-(perfluorooctyl)ethyl methacrylate, hexafluorobutyl methacrylate, and 2,2,3,4,4,4-hexafluorobutyl acrylate.

6. The method of claim 1, wherein in step (1), the crosslinking agent comprises at least one selected from the group consisting of ethoxylated trimethylolpropane triacrylate (ETPTA) and hydroxymethyl ETPTA.

7. The method of claim 1, wherein in step (2), a mass of the thermal initiator is 0.1% to 1% of a mass of the raw material premix.

**8.** The method of claim 1, wherein in step (3), the thermal polymerization is conducted at a temperature of 60°C to 80°C for 1 hour to 2 hours.

**9.** An amphiphilic quasi-solid-state polymer electrolyte prepared by the method of any one of claims 1 to 8.

**10.** A lithium-ion battery, wherein an electrolyte in the lithium-ion battery is the amphiphilic quasi-solid-state polymer electrolyte of claim 9.

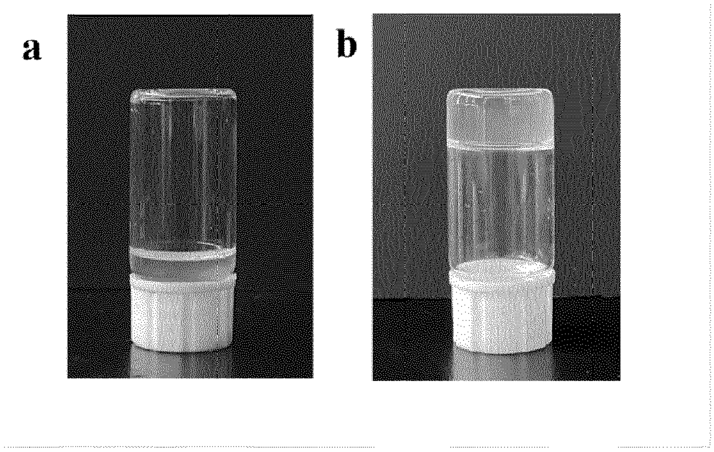


FIG. 1

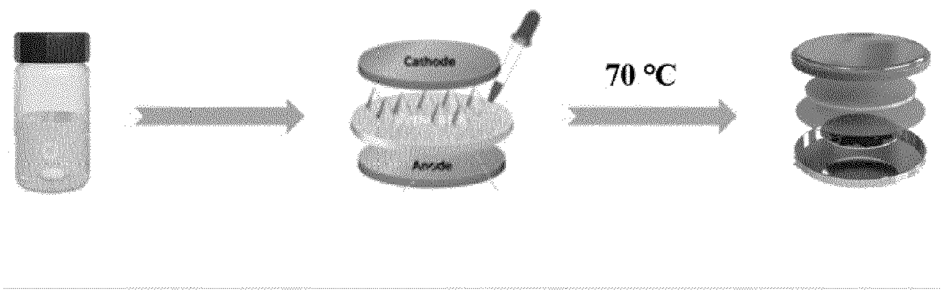


FIG. 2

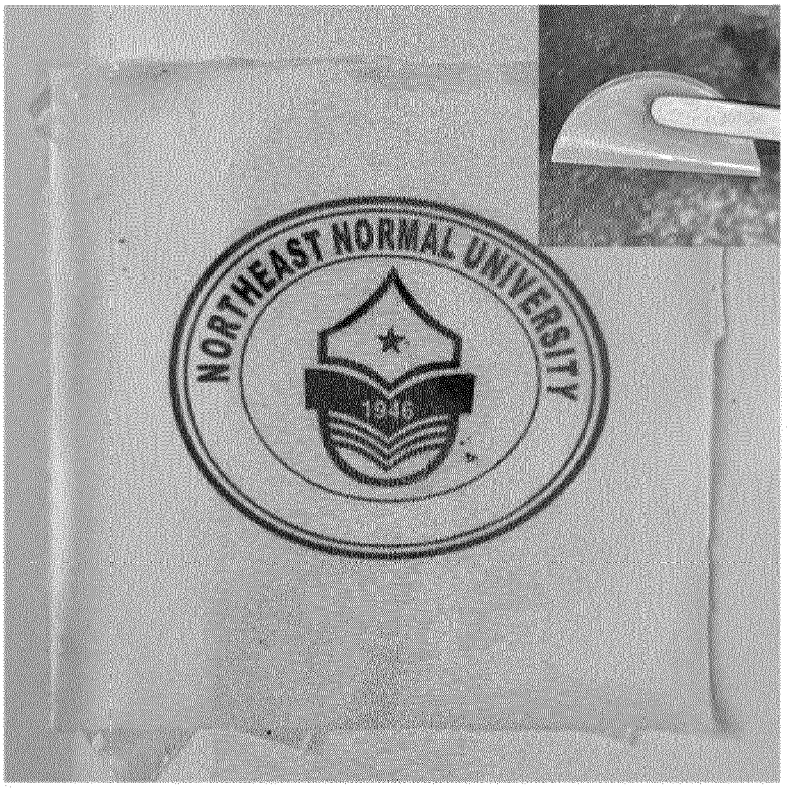


FIG. 3

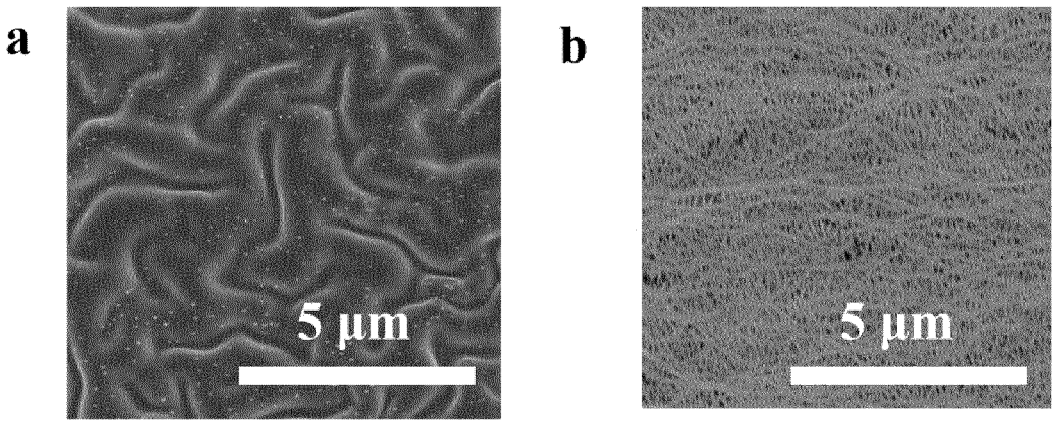


FIG. 4

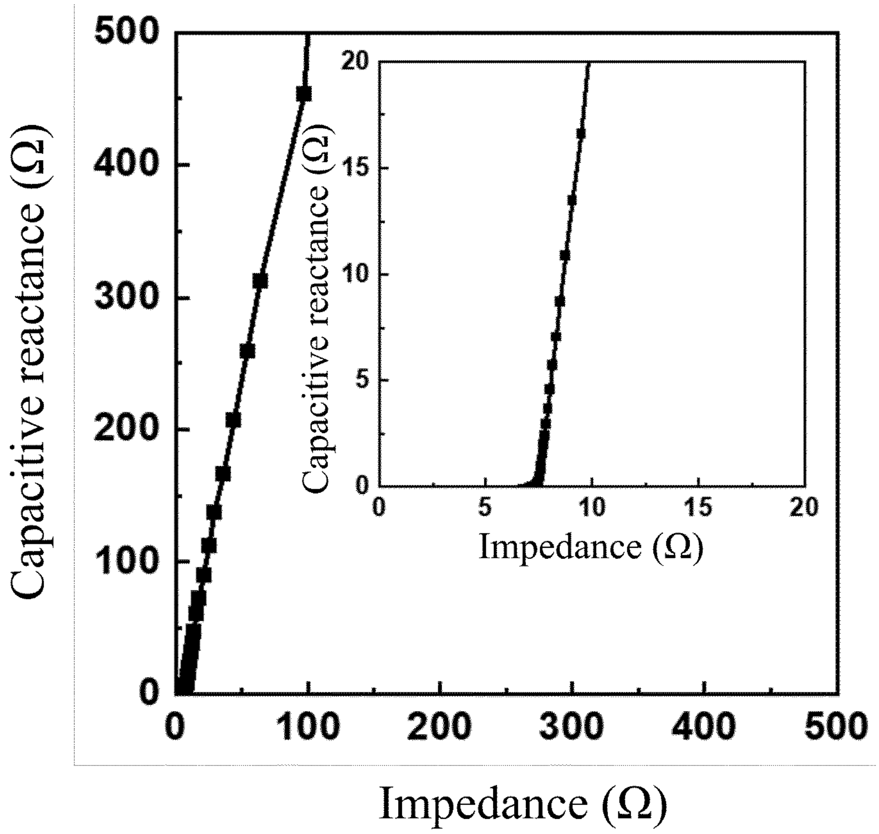
Capacitive reactance (Ω)
Impedance (Ω)
500
400
300
200
100
0
0
100
200
300
400
500
20
15
10
5
0
0
5
10
15
20

FIG. 5

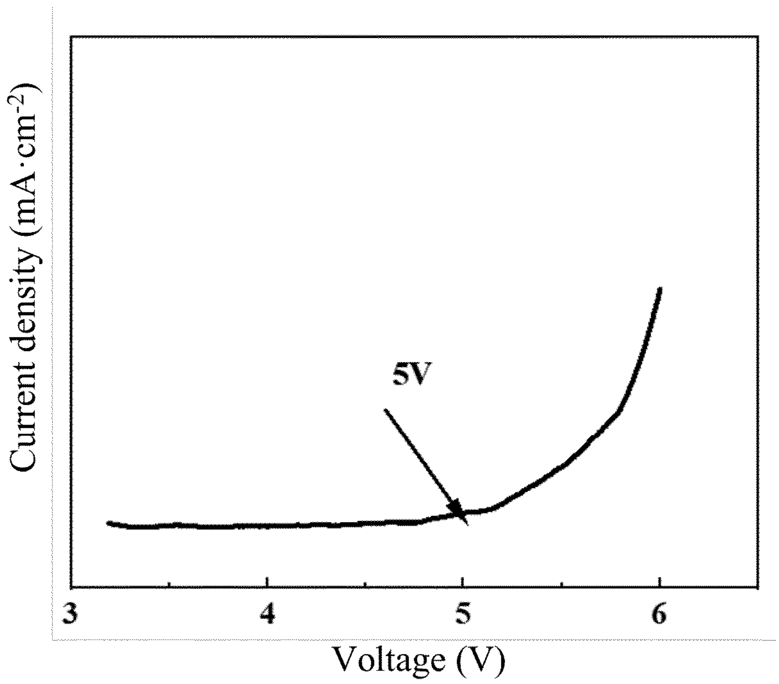
Current density (mA·cm$^{-2}$)
5V
3
4
5
6
Voltage (V)

FIG. 6

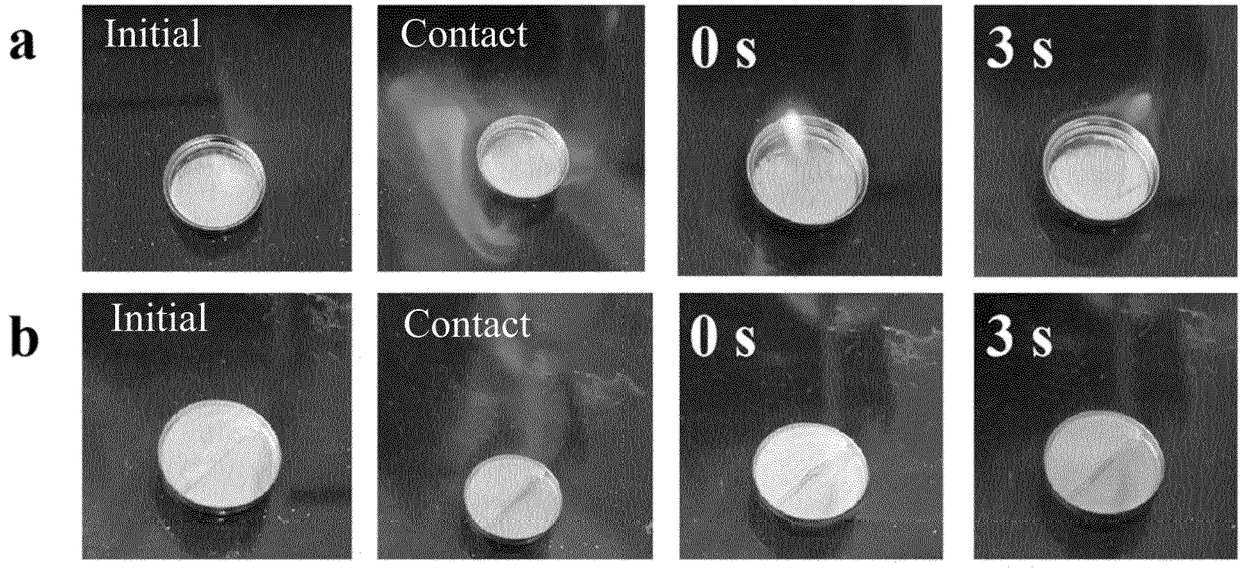
a
Initial
Contact
0 s
3 s
b
Initial
Contact
0 s
3 s

FIG. 7

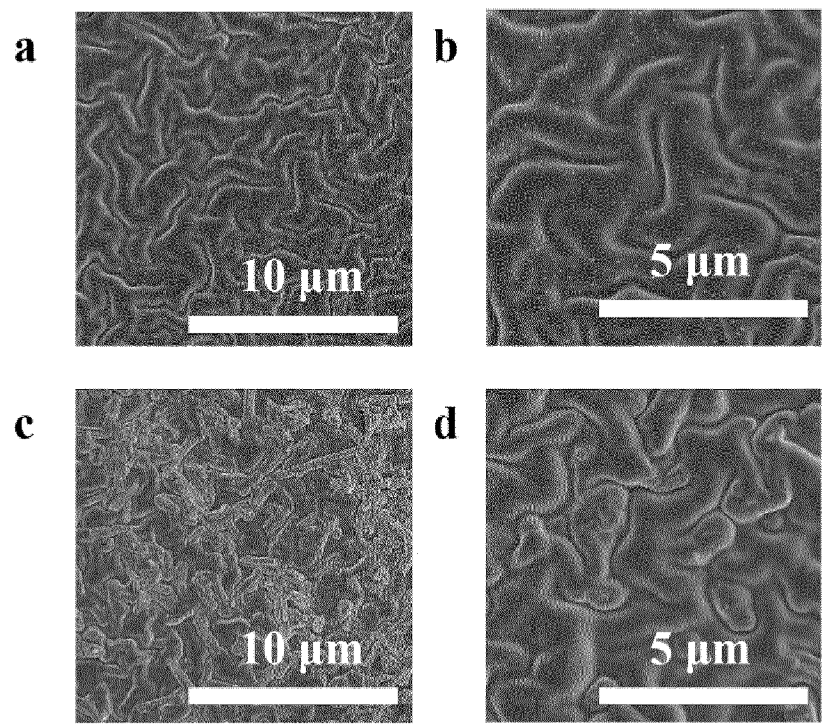
a
10 μm
b
5 μm
c
10 μm
d
5 μm

FIG. 8

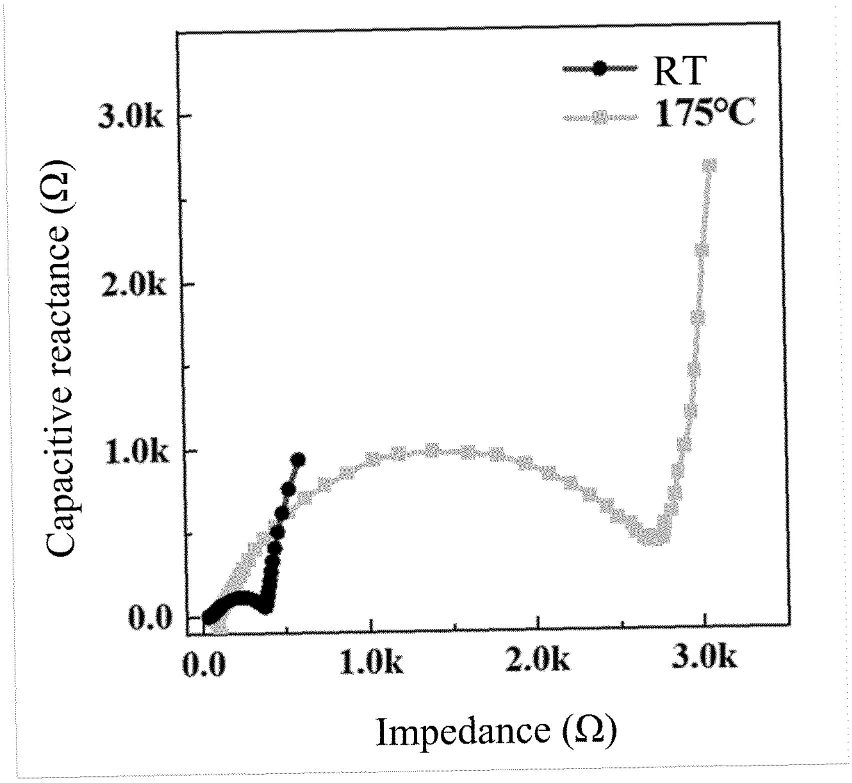
RT
175°C
3.0k
2.0k
1.0k
0.0
Capacitive reactance (Ω)
0.0
1.0k
2.0k
3.0k
Impedance (Ω)

**FIG. 9**

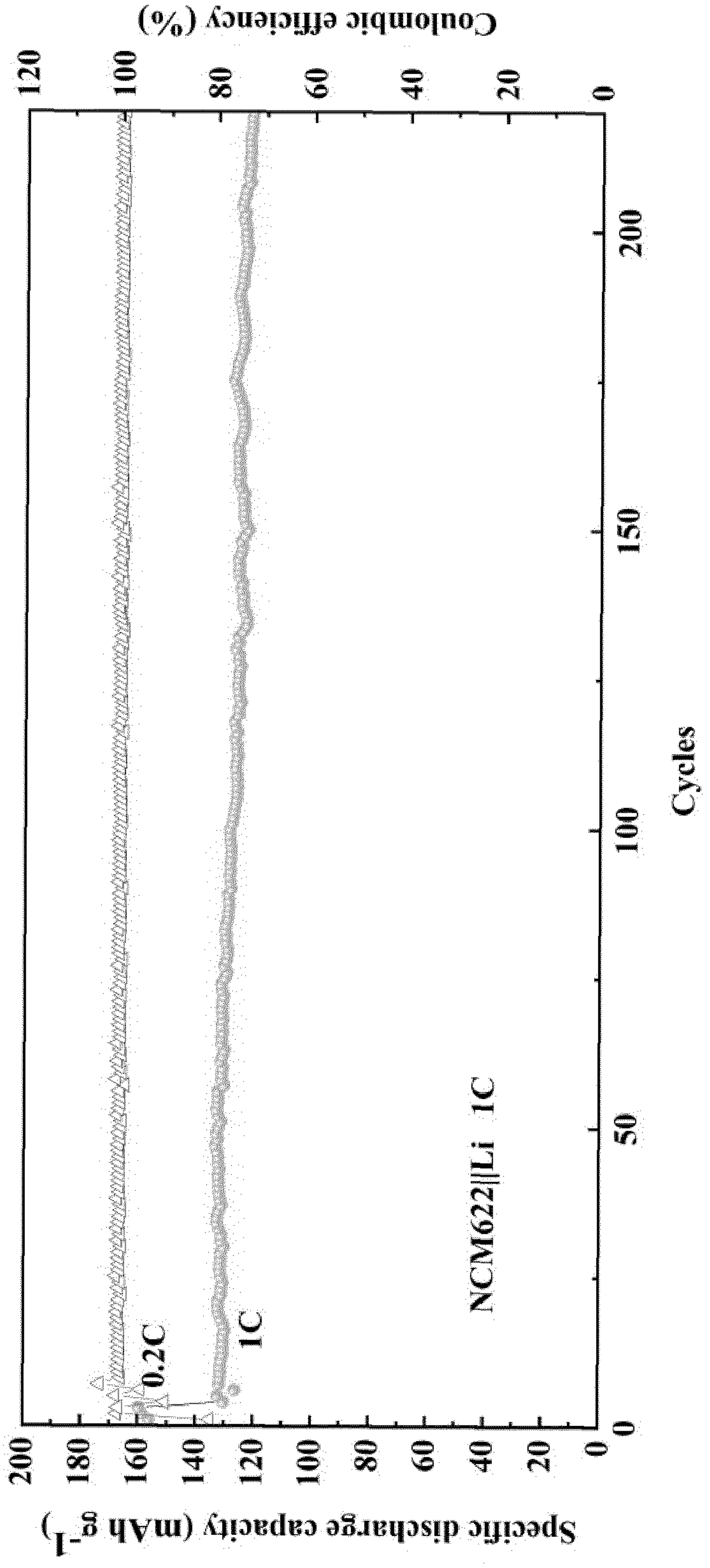
Coulombic efficiency (%)
Specific discharge capacity (mAh g-1)
Cycles
0.2C
1C
NCM622||Li 1C

FIG.10

Europäisches Patentamt
European Patent Office
Office européen des brevets

# EUROPEAN SEARCH REPORT

Application Number
EP 25 18 9064

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LU JING ET AL: "Isocyanoethyl Methacrylate (IMA) as a Bifunctional Electrolyte Additive for LiNi 0.8 Co 0.1 Mn 0.1 O 2 /Graphite Batteries with Enhanced Performance", CHEMELECTROCHEM, vol. 8, no. 19, 18 September 2021 (2021-09-18), pages 3716-3725, XP093339422, Chichester ISSN: 2196-0216, DOI: 10.1002/celc.202101067 Retrieved from the Internet: URL:https://onlinelibrary.wiley.com/doi/full-xml/10.1002/celc.202101067> * abstract * ----- | 1-10 | INV. H01M4/38 H01M4/525 H01M10/052 H01M10/0565 |
| A | ANJUN HU ET AL: "Nonflammable Polyfluorides-Anchored Quasi-Solid Electrolytes for Ultra-Safe Anode-Free Lithium Pouch Cells without Thermal Runaway", ADVANCED MATERIALS, VCH PUBLISHERS, DE, vol. 35, no. 51, 16 November 2023 (2023-11-16), page n/a, XP072556190, ISSN: 0935-9648, DOI: 10.1002/ADMA.202304762 * abstract, conclusion * ----- | 1-10 | TECHNICAL FIELDS SEARCHED (IPC) H01M C08K C08F |
| A | CN 115 101 809 A (CHN ENERGY SCIENCE AND TECH RESEARCH INSTITUTE CO LTD) 23 September 2022 (2022-09-23) * example 5 * ----- | 1-10 | |
| A | CN 111 653 821 A (UNIV SOUTHEAST) 11 September 2020 (2020-09-11) * example 1 * ----- -/-- | 1-10 | |

The present search report has been drawn up for all claims

1

| Place of search | Date of completion of the search | Examiner |
|---|---|---|
| Munich | 25 November 2025 | Steinreiber, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches Patentamt
European Patent Office
Office européen des brevets

# EUROPEAN SEARCH REPORT

Application Number
EP 25 18 9064

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 115 954 539 A (JILIN HANCHI TECH CO LTD) 11 April 2023 (2023-04-11)<br>* example 1 *<br>----- | 1-10 | |

TECHNICAL FIELDS SEARCHED (IPC)

The present search report has been drawn up for all claims

1

| Place of search | Date of completion of the search | Examiner |
|---|---|---|
| Munich | 25 November 2025 | Steinreiber, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 2 of 2

# ANNEX TO THE EUROPEAN SEARCH REPORT ON EUROPEAN PATENT APPLICATION NO.

EP 25 18 9064

This annex lists the patent family members relating to the patent documents cited in the above-mentioned European search report. The members are as contained in the European Patent Office EDP file on The European Patent Office is in no way liable for these particulars which are merely given for the purpose of information.

25-11-2025

| Patent document cited in search report | Publication date | Patent family member(s) | Publication date |
|---|---|---|---|
| CN 115101809 A | 23-09-2022 | NONE | |
| CN 111653821 A | 11-09-2020 | NONE | |
| CN 115954539 A | 11-04-2023 | NONE | |

EPO FORM P0459

For more details about this annex : see Official Journal of the European Patent Office, No. 12/82